# EUROPÄISCHE PATENTANMELDUNG

(11) **EP 4 383 528 A1**
(43) Veröffentlichungstag der Anmeldung: **12.06.2024**
(21) Anmeldenummer: 23213446.0
(22) Anmeldetag: 30.11.2023
(51) Int. Cl.: H02K 3/38, H02K 3/52, H02K 5/22, H02K 3/46

(54) **STATOR EINES ELEKTROMOTORS**

(30) Priorität: 07.12.2022 DE 102022213212
(71) Anmelder: Brose Fahrzeugteile SE & Co. Kommanditgesellschaft, Würzburg, 97076 Würzburg (DE)
(72) Erfinder: GRIMM, Marco, 85716 Unterschleißheim (DE); WÜST, Stefan, 97816 Lohr am Main (DE)
(74) Vertreter: FDST Patentanwälte

(57) **Zusammenfassung**

Die Erfindung betrifft einen Stator (1) eines Elektromotors, mit einem Statorgrundkörper (2) mit radial orientierten Statorzähnen (5), welche Spulen (6) einer mehrphasigen Spulenwicklung (3) tragen, und mit einer Statorkappe (10) mit mindestens einer Aufnahmekontur (13), in welche mindestens ein Wicklungsabschnitt (12) der Statorwicklung (3) eingelegt ist, sowie mit mindestens einem Kontaktanschluss (15) mit einem verformbaren Kontakthaken (14), der den Wicklungsabschnitt (12) im Zuge eines Fügeprozesses aufnimmt und im Anschluss an einen Verformungsprozess unverlierbar kontaktiert.

## Beschreibung

Die Erfindung betrifft einen Stator eines Elektromotors, aufweisend eine Anzahl von Statorzähnen, welche Spulen einer mehrphasigen Spulenwicklung tragen, und eine Statorkappe. Sie betrifft weiter einen Elektromotor mit einem solchen Stator.

Ein derartiger Elektromotor ist als sogenannter bürstenloser Elektromotor (bürstenloser Gleichstrommotor, BLDC-Motor) ausgeführt, bei dem verschleißanfällige Bürstenelemente eines mechanischen Kommutators durch eine elektronische Kommutierung des Motorstroms ersetzt ist. Ein bürstenloser Elektromotor als elektrische (Drehstrom-)Maschine weist einen Stator mit einem Statorgrundkörper oder Statorblechpaket mit einer Anzahl von beispielsweise radial einwärts gerichteten Statorzähnen auf, welche eine elektrische Drehfeld- oder Statorwicklung in Form einzelner Statorspulen tragen, die aus einem Isolierdraht gewickelt sind. Die Spulen sind einzelnen Strängen oder Phasen der Maschine zugeordnet und untereinander in einer vorbestimmten Weise, beispielsweise Dreieckschaltung, verschaltet.

Bei einem dreiphasigen Elektromotor weist der Stator eine Statorwicklung mit drei Phasen und somit beispielsweise drei Phasenleiter oder Phasenwicklungen auf, die jeweils phasenversetzt mit elektrischem Strom beaufschlagt bzw. bestromt werden, um ein magnetisches Drehfeld zu erzeugen, in dem ein üblicherweise mit Permanentmagneten versehener Rotor rotiert.

Die Phasenenden der Phasenwicklungen werden zur Ansteuerung des Elektromotors an eine Kontaktvorrichtung angebunden, die beispielsweise gemäß der WO 2016/008827 einen Steckeranschluss in Form eines messerartigen Schneid-Klemm-Kontakts aufweist. Dabei werden die Spulen der Statorwicklung mittels eines stirnseitig auf den Stator aufgesetzten Verschaltungselements in bestimmter Weise miteinander verschaltet, wobei als Wickel- bzw. Anschlussschema eine Sternschaltung oder eine Dreieckschaltung der Phasenwicklungen üblich ist.

Zur Verschaltung der Spulen wird mindestens ein zu kontaktierender Drahtabschnitt des Wicklungsdrahts bzw. ein zu kontaktierender Wicklungsabschnitt der Statorwicklung in einen ersten Schlitz einer quaderförmigen Stecktasche des Verschaltungselements eingelegt sowie mit einem in die Stecktasche einsteckbaren Schneid-Klemm-Kontakts (Schneidklemmkontakt) des Kontaktelements innerhalb der Stecktasche elektrisch kontaktiert und mechanisch fixiert. Das Einstecken des Kontaktelements erfolgt dabei in Richtung des Stators mittels eines Einpresswerkzeugs, welches an der dem Schneid-Klemm-Kontakt axial abgewandten Seite des Kontaktelementes an einer horizontal verlaufenden oberen Kante ansetzt.

Der Schneid-Klemm-Kontakt des Kontaktelements weist eine Schneide auf, die beim Einstecken in die Stecktasche des Verschaltungselements die Isolierung des im ersten Schlitz befindlichen Drahtabschnitts der Spulenwicklung durchtrennt und die elektrische Kontaktierung mit dem Schneid-Klemm-Kontakt herstellt. An der dem Schneid-Klemm-Kontakt axial gegenüberliegende Seite weist das Kontaktelement einen sich axial erstreckenden Kontaktschlitz auf, in den eine Stromschiene einer Kontaktvorrichtung elektrisch klemmkontaktierend eingesteckt oder einsteckbar ist. Die Kontaktvorrichtung kann dabei als eine die Motorelektronik tragende Leiterplatte oder als ein Steckeranschluss ausgeführt sein.

Insbesondere bei nadel- oder robotergewickelten Statoren kann die Verschaltung der Statorwicklung mit den Phasenkontakten in Schneid-Klemm-Technik, beispielsweise in Folge von Toleranzabweichungen, zu unerwünschten Fehlkontaktierungen führen. Werden hingegen ein Heißverstemmprozess zwischen der Statorwicklung und den Phasen- oder Motorkontakten bevorzugt und dabei übliche Hakengeometrien für die Kontaktierung der typischen Runddrähte der Statorwicklung bzw. deren Spulenanschlüsse verwendet, so ist ein unerwünscht aufwendiger bzw. kostenintensiver Automatisierungs- oder Roboterprozess beim Einlegen von Drahtschlaufen erforderlich, zumal die positionierte Drahtschlaufe bis zum Verstemmprozess unter Spannung stehen muss, um ein Ausgleiten aus dem geöffneten Haken zu vermeiden. Insbesondere müsste der Haken bereits in einer vorhandenen Statorabdeckkappe integriert sein. Dies ist wiederum unerwünscht, insbesondere hinsichtlich einer gewünschten generischen Schnittstelle.

Der Erfindung liegt die Aufgabe zugrunde, einen besonders geeigneten Stator für einen Elektromotor anzugeben. Insbesondere soll eine fehlersichere, toleranzunabhängige und/oder einfach automatisierbare Kontaktierung einer Statorwicklung mit Phasenkontakten, insbesondere einer Motorelektronik, realisiert werden. Der Erfindung liegt weiterhin die Aufgabe zugrunde, einen besonders geeigneten Elektromotor mit einem solchen Stator anzugeben.

Hinsichtlich des Stators wird die Aufgabe mit den Merkmalen des Anspruchs 1 und bezüglich des Elektromotors mit den Merkmalen des Anspruchs 10 erfindungsgemäß gelöst. Vorteilhafte Ausgestaltungen und Weiterbildungen sind Gegenstand der Unteransprüche. Die im Hinblick auf den Stator angeführten Vorteile und Ausgestaltungen sind sinngemäß auch auf den Elektromotor übertragbar und umgekehrt.

Dazu weist der Stator eines Elektromotors einen hohlzylindrischen Statorgrundkörper mit einer Anzahl von - bezogen auf die Zylinderachse - radial orientierten Statorzähnen auf, welche Spulen einer mehrphasigen Statorwicklung tragen. Des Weiteren weist der Stator eine stirnseitig am Statorgrundkörper angeordnete, insbesondere kreisringförmige, Statorkappe mit mindestens einer Aufnahmekontur auf, in welche mindestens ein, nachfolgend auch als (Rund-)Draht oder Spulenende bezeichneter Wicklungsabschnitt der Statorwicklung eingelegt ist. Ferner weist der Stator mindestens einen Kontaktanschluss mit einem verformbaren Kontakthaken auf, der den mindestens einen Wicklungsabschnitt (Rund-/Draht, Spulenende) im Zuge eines Fügeprozesses aufnimmt und im Anschluss an einen Verformungsprozess unverlierbar kontaktiert. Bei einem Stator mit einer dreiphasigen Statorwicklung sind geeigneter Weise drei Aufnahmekonturen und drei Kontaktanschlüsse mit verformbaren Kontakthaken vorgesehen. Die Aufnahmekontur und der Kontakthaken sind vorzugsweise zur Aufnahme von mindestens zwei Wicklungsabschnitten (Rund-/Drähten, Spulenenden) vorgesehen und eingerichtet.

In zweckmäßiger Ausgestaltung weist die Statorkappe einen, vorzugsweise kreisringförmigen, Kappenabschnitt und einen randseitigen Kragenabschnitt auf. Die Statorkappe weist eine Anzahl an Durchbrüchen für den jeweiligen Wicklungsabschnitt der Statorwicklung auf, wobei die Durchbrüche oder Öffnungen im Kragenabschnitt und/oder im Kappenabschnitt vorgesehen sind. Vorzugsweise übergreift bzw. umgreift der randseitige Kragenabschnitt den Statorgrundkörper an einer (Stator-)Stirnseite.

Die Erfindung geht von der Überlegung aus, zur Kontaktierung eines oder mehrerer Runddrähte oder Wicklungsabschnitte der Statorwicklung eines Elektromotors einen Motorphasenkontakt mit integriertem (Kontakt-)Haken bereitzustellen, dessen Hakengeometrie derart ausgeführt ist oder sein sollte, dass dieser beim Fügen auf den gewickelten Stator selbstständig vorpositionierte Wicklungsabschnitt, beispielsweise entsprechende Runddrähte oder Spulenenden, fängt. Des Weiteren sollten beim (Heiß-)Verstemmen die im Haken gefangenen Wicklungsabschnitt (Runddrähte) durch Zusammendrücken der Hakengeometrie automatisch in dem Haken zentriert werden, so dass während und nach dem Verstemmprozess oder Crimpen der oder jeder Wicklungsabschnitte oder die Drähte nicht mehr aus dem Haken herausgleiten können.

In vorteilhafter Ausgestaltung ist die Aufnahmekontur von einer Anzahl an Aufnahmerillen oder Einlegenuten gebildet, in welche der mindestens eine Wicklungsabschnitt der Spulenwicklung eingelegt ist. Geeigneter Weise ist die Aufnahmekontur derart ausgelegt, dass mindestens zwei Wicklungsabschnitte, Runddrähte oder Spuleneden, insbesondere axial übereinander, aufgenommen werden können.

Besonders bevorzugt ist die Aufnahmekontur in einer Anzahl von zueinander beabstandeten Axiallaschen gebildet. Zweckmäßigerweise sind die Axiallaschen an die Statorkappe, insbesondere an deren, vorzugsweise kreisringförmigen, Kappenabschnitt, angeformt. Insbesondere weisen die Axiallaschen freiendseitig zueinander beabstandete Axialstege unter Ausbildung der, vorzugsweise schlitz- oder nutartigen, Aufnahmekontur auf.

Die Aufnahmerillen bzw. Einlegenuten sind vorzugsweise axial zugänglich. Mit anderen Worten verlaufen die Aufnahmerillen oder Einlegenuten und somit die Aufnahmekontur für den oder jeden Wicklungsabschnitt in Axialrichtung. Auch sind die Aufnahmerillen bzw. Einlegenuten geeignet und vorgesehen, beispielsweise zwei Wicklungsabschnitte oder Spulenenden aufzunehmen. Diese stehen im Anschluss an den Wickelvorgang, bei dem die Spulen bzw. die Statorwicklung auf die Statorzähne gewickelt oder aufgebracht werden, dem Statorgrundkörper an einer Stirnseite zunächst über und sind bevorzugt axial orientiert. Anschließend wird die Statorkappe an dieser Stirnseite auf den Statorgrundkörper aufgesetzt, wobei die axial orientierten Spulenenden oder -anschlüsse korrespondierende Öffnungen in der Statorkappe durchgreifen. Daraufhin werden die Spulenenden vorzugsweise in Umfangsrichtung des Stators (azimutal) umgebogen und dabei in die Aufnahmekonturen, bevorzugt in Form der Aufnahmerillen oder Einlegenuten, eingelegt. Dieser Vorgang erfolgt bevorzugt ebenfalls automatisiert.

Geeigneter Weise greift der Kontakthaken des Kontaktanschlusses im Zuge des Fügeprozesses in Axialrichtung zwischen die Axiallaschen und nimmt dabei den oder jeden in der Aufnahmekontur einliegenden Wicklungsabschnitt der Statorwicklung auf.

Besonders zweckmäßig ist der Kontaktanschluss ein U-förmiges Stanz-Biege-Teil, dessen einer U-Schenkel unter Bildung des Kontakthakens zweckmäßigerweise L-förmig gebogen ist. Somit kann ein Verstemmwerkzeug, beispielsweise eine Schweißzange, beide Hakenschenkel des Kontakthakens mit den darin aufgenommenen Wicklungsabschnitten (über-)greifen und gegeneinanderpressen. Vorzugsweise weist der Kontakthaken des Kontaktanschlusses zwischen (den) zwei Hakenschenkeln einen insbesondere ösenartigen und/oder konischen Kontaktbereich und/oder Klemmspalt für den oder jeden Wicklungsabschnitt der Statorwicklung auf.

Geeigneter Weise weist der Kontakthaken des Kontaktanschlusses einen im Querschnitt spitzwinkligen Aufnahme- oder Eintrittsbereich für den jeweiligen Wicklungsabschnitt der Statorwicklung auf, wobei der Winkel des Eintrittsbereichs (35 ± 15) °, vorzugsweise zwischen 20° und 45°, beträgt.

Der erfindungsgemäße Elektromotor ist insbesondere als ein bürstenloser Elektromotor ausgeführt und als Antrieb für ein Verstellelement oder als Bremsmotor für ein Anti-Blockier-System eines Kraftfahrzeugs geeignet und eingerichtet. Der Elektromotor weist beispielsweise ein topfförmiges Motorgehäuse (Poltopf) auf, welches stirnseitig mit einem Lagerschild verschlossen sein kann, wobei ein vorstehend beschriebener Stator in das Motorgehäuse eingesetzt ist. Durch den erfindungsgemäßen Stator ist ein besonders geeigneter Elektromotor realisiert, welcher insbesondere hinsichtlich unterschiedlicher Anwendungen oder Kundenanforderungen besonders einfach und flexibel an eine jeweilige Kundenschnittstelle anpassbar ist.

Der Elektromotor ist beispielsweise als ein Innenläufermotor ausgeführt, bei welchem ein drehfest auf einer Motorwelle fixierter Rotor im Drehfeld des diesen umfassenden, feststehenden (gehäusefesten) Stators rotiert. Die Motorwelle ist hierbei beispielsweise mittels eines Wälzlagers des Lagerschilds rotierbar gelagert. Dem Elektromotor bzw. dessen Stator ist eine (Motor-)Elektronik zur, beispielsweise dreiphasigen, Bestromung der Statorwicklung zugeordnet, wobei die Elektronik im Motorgehäuse angeordnet sein kann. Mit der Elektronik werden die Kontaktanschlüsse kontaktieret bzw. elektrisch und mechanisch verbunden, wobei die Kontaktanschlüsse wiederum in der beschriebenen Art und Weise mit den Wicklungsabschnitten der Statorwicklung verbunden sind.

Nachfolgend sind Ausführungsbeispiele der Erfindung anhand einer Zeichnung näher erläutert. Darin zeigen:
- Fig. 1: in einer perspektivischen Darstellung einen Stator eines Elektromotors mit einem hohlzylindrischen Statorgrundkörper mit radial einwärts orientierten Statorzähnen und darauf angeordneten Spulen einer Statorwicklung,
- Fig. 2: in einer Darstellung gemäß Figur 1 den Stator mit stirnseitig aufgesetzter Statorkappe mit in einer Aufnahmekontur einliegenden und von einem hakenförmigen Kontaktanschluss ergriffenen Wicklungsabschnitten der Statorwicklung,
- Fig. 3: in einem vergrößerten Ausschnitt den Kontakthaken des Kontaktanschlusses in einer Fügeposition axial oberhalb der zu greifenden Wicklungsabschnitte,
- Fig. 4: in einem vergrößerten Ausschnitt die in der kappenseitigen Aufnahmekontur einliegenden und vom Kontakthaken ergriffenen Wicklungsabschnitte während eines Fügeprozesses bzw. (zeitlich) vor einem Verformungsprozess,
- Fig. 5: in einer perspektivischen Darstellung den Kontaktanschluss mit von einem abschnittsweise gezeigten Kontaktschenkel abgekröpftem oder abgebogenem Kontakthaken,
- Fig. 6: in einer Seitenansicht den Kontakthaken des Kontaktanschlusses mit Blick in einen zwischen Hakenschekeln gebildeten Kontakt- und/oder Klemmbereich und spitzwinkligem Aufnahme- oder Einlaufbereich für die Wicklungsabschnitte, und
- Fig. 7a und 7b: schematisch den Kontakthaken vor bzw. im Anschluss an den Verformungsprozess, insbesondere (Heiß-)Stemmprozess, vorzugsweise mittels einer Schweißzange.

Einander entsprechende Teile und Größen sind in allen Figuren mit den gleichen Bezugszeichen versehen.

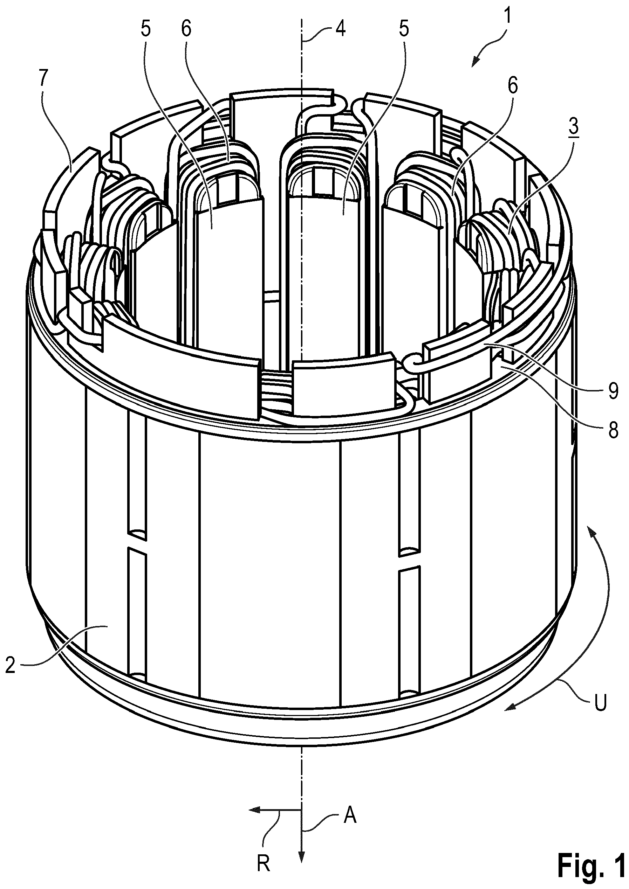

Fig. 1 zeigt einen Stator 1 eines Elektromotors mit einem hohlzylindrischen Statorgrundkörper 2 und mit einer Statorwicklung 3. Die Zylinderachse 4 sowie die hierauf bezogene Axialrichtung A und die hierauf bzw. ebenfalls auf die Zylinderachse 4 bezogene Radialrichtung R sind in Fig. 1 veranschaulicht. Der Statorgrundkörper 2 ist beispielsweise als Blechpaket aus gestapelten Statorblechen gebildet. Der Statorgrundkörper 2 weist radial einwärts gerichtete Statorzähne 5 mit darauf, vorzugsweise in einem automatisierten Wicklungsverfahren oder Wicklungsprozess, angeordneten Spulen 6 auf, welche die Statorwicklung 3 bilden.

An einer (in Figur 1 oberen) Stirnseite 7 des Statorgrundkörpers 2 sind axial verlaufende Schlitze oder Nuten 8 vorgesehen, über welche Wicklungsabschnitte 9 der oder einige der Spulen 6 geführt und in Umfangsrichtung U des Stators 1 verlegt sind. Auf diese Weise sind beispielsweise bei einer dreiphasigen Statorwicklung 3 jeweils mehrere Spulen 6 einer Phase auf unterschiedlichen Statorzähnen 5 angeordnet und miteinander verbunden.

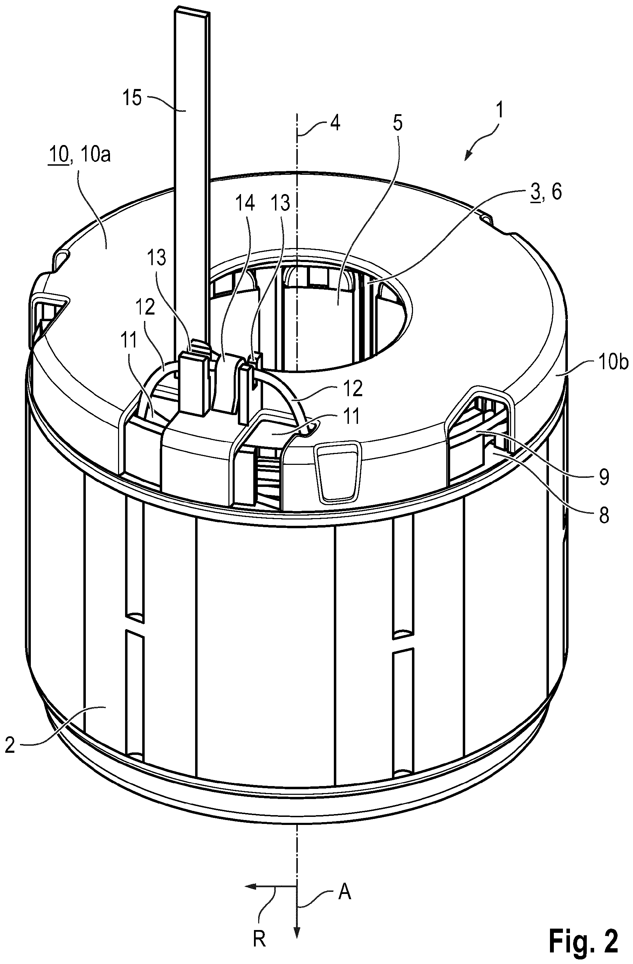

Fig. 2 zeigt den Stator 1 mit dem Statorgrundkörper 2 und mit einer auf dessen Stirnseite 7 aufgesetzten Statorkappe 10. Die Statorkappe 10 weist einen kreisringförmigen Kappenabschnitt 10a und einen daran randseitig angeformten, umlaufenden Kragen- oder Randabschnitt 10b auf, der den Statorgrundkörper 2 stirnseitig übergreift. Die Statorkappe 10 weist Durchbrüche oder Öffnungen 11 auf, über welche Wicklungsabschnitte oder Spulenenden 12 zunächst axial herausgeführt sind. Diese Wicklungsabschnitte (Spulenenden) 12 sind in eine auf der Oberseite des Kappenabschnitts 10a der Statorkappe 10 vorgesehene Aufnahmekontur 13, vorzugsweise wiederum automatisiert, eingelegt.

Im Bereich der Aufnahmekontur 13 sind die Wicklungsabschnitte 12 von einem Kontakthaken 14 eines im Ausführungsbeispiel axial orientierten Kontaktanschlusses 15 ergriffen. Der Kontaktanschluss 15 bildet vorzugsweise einen Phasenanschluss der Statorwicklung 3. Auf die gleiche Art und Weise sind beispielsweise zwei weitere Phasenanschlüsse mittels entsprechender Kontaktanschlüsse 15 hergestellt, indem diese wiederum mittels deren Kontakthaken 14 mindestens einen weiteren Wicklungsabschnitt 12 oder entsprechende Spulenenden ergreifen und kontaktieren. Dadurch sind die Spulen 6 der Statorwicklung 3 beispielsweise in Dreieckschaltung miteinander verschaltet.

Der Stator 1 ist in nicht näher dargestellter Art und Weise ein Bestandteil eines Elektromotors, dessen auf einer Motorwelle (Rotorwelle) drehfest angeordneter, mit Permanentmagneten bestückter Rotor vom Stator 1 umschlossen ist und bei bestimmter Statorwicklung 3 in dem dabei erzeugten Drehfeld rotiert. Ein solcher Elektromotor ist ein bürstenloser, elektronisch kommutierter Innenläufermotor. Die phasenselektive Bestromung der Statorwicklung 3 erfolgt über eine (Motor-)Elektronik, die mit dem oder jedem Phasenanschluss in Form des jeweiligen Kontaktanschlusses 15 verbunden bzw. elektrisch kontaktiert ist.

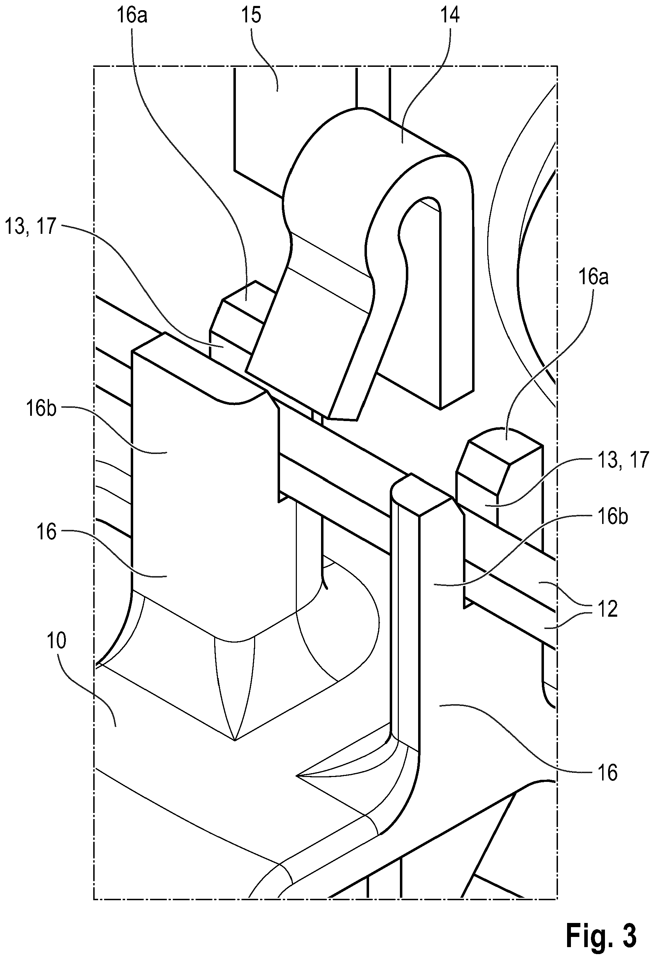

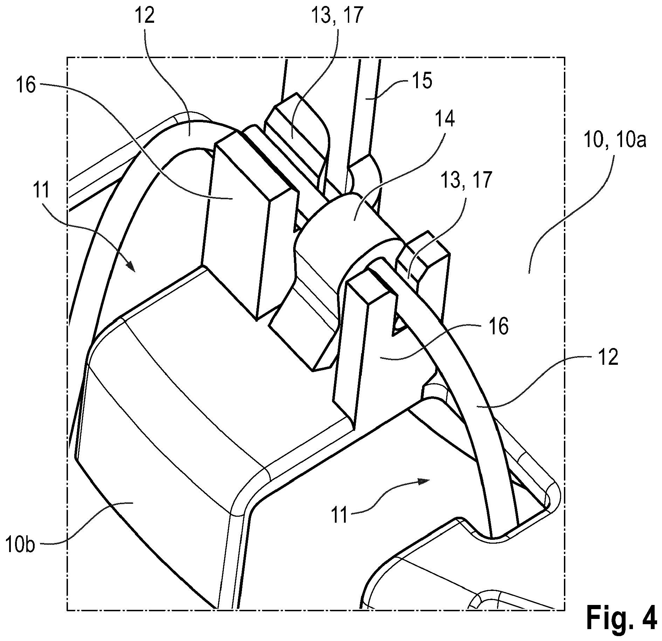

Wie aus den Fig. 3 und 4 vergleichsweise deutlich ersichtlich ist, ist die jeweilige Aufnahmekontur 13 für die Spulenenden oder Wicklungsabschnitte 12 in im Ausführungsbeispiel 2 in Umfangsrichtung U (azimutal oder tangential) beabstandeten Axiallaschen 16 gebildet. Diese sind an die Statorkappe 10 und dort an den ringförmigen Kappenabschnitt 10a - auf dessen Oberseite - angeformt. Diese Axiallaschen 16 verlaufen in Axialrichtung A und weisen freiendseitig zwischen zueinander beabstandeten, insbesondere gabelartigen, Axialstegen 16a, 16b oben oder endseitig offene Schlitze oder Nuten 17 auf, welche die axial zugänglichen Aufnahmekonturen 13 in Form entsprechender Aufnahmerillen bilden. In diese sind die im Ausführungsbeispiel zwei als Runddrähte ausgeführten Wicklungsabschnitte oder Spulenenden 12 axial neben- oder übereinander eingelegt.

Der Abstand zwischen den Axialaschen oder -stegen 16 ist an die Breite des Kontakthakens 14 des Kontaktanschlusses 15 derart angepasst, dass der Kontakthaken 14 im Zuge eines, vorzugsweise automatisierten, Fügeprozesses zwischen die beiden Axialstege 16 greifen und dabei die Wicklungsabschnitte 12 aufnehmen kann.

Fig. 3 zeigt dabei den bereits in die entsprechende Fügeposition zwischen den Axiallaschen 16 gebrachten Kontakthaken 14, bevor dieser die Wicklungsabschnitte 12 aufgenommen hat.

Fig. 4 zeigt einen weiteren Schritt des Fügeprozesses, bei dem der Kontakthaken 14 weiter in Axialrichtung A bewegt oder verfahren ist und dabei die beiden Wicklungsanschnitte 12 übergriffen hat, so dass diese im Kontakthaken 14 einliegen.

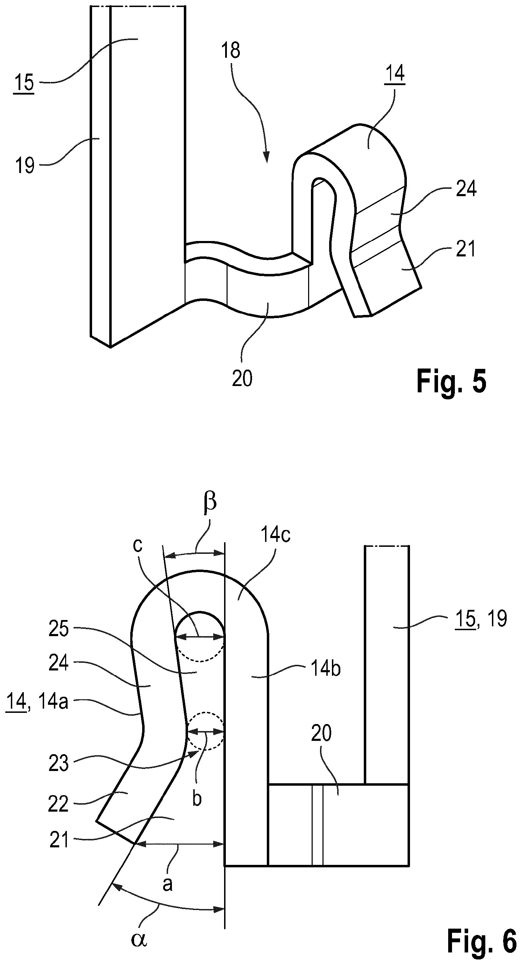

Fig. 5 zeigt (ausschnittsweise) den Kontaktanschluss 15 und den Kontakthaken 14 in der bevorzugten Ausführung als ein Stanz-Biege-Teil. Dieses ist erkennbar im Ausgangszustand U-förmig, wobei einer der U-Schenkel 18 unter Bildung des Kontakthakens 14 bevorzugt L-förmig gebogen und vom anderen U-Schenkel 19 entsprechend abgebogen ist. Im Ausführungsbeispiel ist dabei der Verbindungsschenkel 20 zwischen den U-Schenkeln 18, 19 etwa S-förmig gebogen bzw. gekröpft. Auf diese Weise ist der Kontakthaken 14 - vom U-Schenkel 19 des Kontaktanschlusses 15 unverdeckt - für eine Schweißzange oder dergleichen frei bzw. ungehindert zugänglich.

Fig. 6 zeigt - wiederum ausschnittsweise - den Kontaktanschluss 15 mit dem Kontakthaken 14 in einer Seitenansicht. Erkennbar ist der Kontakthaken 14 selbst wiederum U-förmig mit zwei Hakenschenkeln 14a und 14b ausgeführt. Der Hakenschenkel 14b ist über den Verbindungssteg 20 mit dem Kontaktanschluss 15 bzw. mit dem U-Schenkel 19 verbunden. Der an einem Schenkelende lose und somit gegenüber dem festgelegten Hakenschenkel 14b verformbare Hakenschenkel (Freischenkel) 14a des Kontakthakens 14 weist freiendseitig einen ausgestellten Schenkelabschnitt 21 auf. Dadurch ist ein spitzwinkliger Aufnahme- oder Einlaufbereich 22 für den jeweiligen Wicklungsabschnitt 12 gebildet. Dadurch ist ein fehlersicheres Ergreifen der Wicklungsabschnitte 12, insbesondere auch zum Ausgleich von Toleranzen, ermöglicht. Der veranschaulichte Winkel α beträgt vorzugsweise zwischen 20° und 45°.

In diesem Einlaufbereich 22 ist der Abstand bzw. die lichte Weite a zwischen den beiden Hakenschenkeln 14a und 14b vorzugsweise größer als, insbesondere mindestens doppelt so groß wie, der Draht- oder Wicklungsdurchmesser des jeweiligen Wicklungsabschnitts bzw. Spulenendes 12.

In einem Übergangsbereich 23 zwischen dem ausgestellten Schenkelabschnitt 21 und einem sich daran anschließenden Schenkelabschnitt 24 des entsprechenden Hakenschenkels 14a ist der Abstand bzw. die lichte Weite b zwischen den Hakenschenkeln 14a und 14b gleich dem oder nur geringfügig größer als der Draht- oder Wicklungsdurchmesser des Wicklungsabschnitts 12. Dieser Übergangsbereich 23 des Kontakthakens 14 bildet quasi eine Engstelle für den jeweiligen Wicklungsabschnitt 12 der Statorwicklung 3 bzw. für das Spulenende einer entsprechenden Spule 6.

Gegenüberliegend zum Einführbereich 22 schließt sich an den Übergangsbereich 23 bzw. an die dadurch gebildete Engstelle mit der lichten Weite b ein Aufnahme- oder Kontaktbereich 25 an. Dieser Bereich 25 ist zu einem Verbindungsschenkel 14c zwischen den beiden Hakenschenkeln 14a und 14b des Kontakthakens 14 hin konisch aufgeweitet. Die maximale lichte Weite c zwischen den beiden Hakenschenkeln 14a und 14b des Kontakthakens 13 ist in diesem Bereich 25 vorzugsweise größer, insbesondere um mindestens 10% oder etwa den Faktor 1,1 größer, als der Draht- oder Wicklungsdurchmesser des Wicklungsabschnitts oder Spulenendes 12. Der veranschaulichte Winkel β dieses wiederum vorzugsweise spitzwickligen Aufnahmebereichs 25 zwischen den beiden Hakenschenkeln 14a und 14b ist insbesondere kleiner als 45° und größer als 0°.

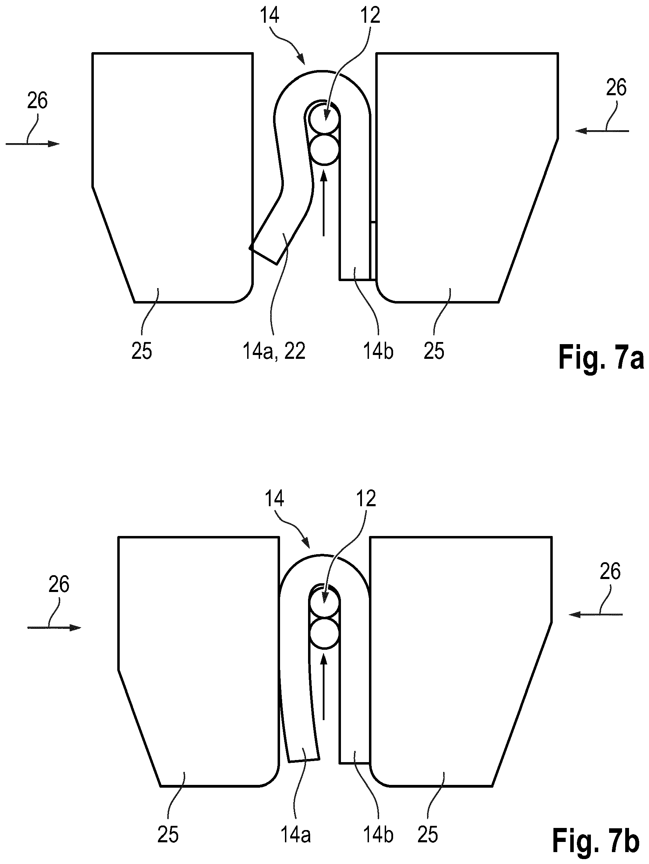

Die Fig. 7a und 7b veranschaulichen einen Verformungsprozess des Kontakthakens 14 im Anschluss an den Fügeprozess, in welchem die Wicklungsabschnitte oder Spulenenden 12 vom Kontakthaken 14 aufgenommen bzw. in diesen eingelegt worden sind.

Fig. 7a veranschaulicht hierbei die präzise Orientierung der Wicklungsabschnitte, Spulenenden oder Runddrähte 12 aufgrund der speziellen Hakengeometrie des Kontakthakens 14. Die Richtungspfeile 26 veranschaulichen hierbei die Bewegungsrichtung einer für den Verformungsprozess beispielsweise eingesetzten Schweißzange 27.

Fig. 7b zeigt den im Zuge des Verformungsprozesses mittels der Schweißzange 27 - und vorzugsweise zusätzlichem Wärmeeintrag - verformten Kontakthaken 14. Erkennbar ist der auch als Freischenkel bezeichnete Hakenschenkel 14a im Zuge des Verformungsprozesses derart verformt, dass der vor der Verformung ausgestellte Hakenbereich oder Schenkelabschnitt 21 in Richtung des anderen Hakenschenkels 14b ver- oder umgeformt ist. Dabei ist oder wird der ursprünglich spitzwinklige Einlaufbereich 22 des Kontakthakens 14 auf eine lichte Weite reduziert, welche kleiner ist als der Draht- oder Wicklungsdurchmesser des Wicklungsabschnitts oder Spulenendes 12. Auf diese Weise sind die Spulenenden oder Wicklungsabschnitte 12 im verformten Kontakthaken 14 zuverlässig kontaktiert und verliersicher aufgenommen.

Zusammenfassend betrifft die Erfindung einen Stator 1 mit einem Statorgrundkörper 2 mit radial orientierten Statorzähnen 5, welche Spulen 6 einer mehrphasigen Spulenwicklung 3 tragen, und mit einer Statorkappe 10 mit mindestens einer Aufnahmekontur 13, in welche mindestens ein Wicklungsabschnitt 12 eingelegt ist, sowie mit mindestens einem Kontaktanschluss 15 mit einem verformbaren Kontakthaken 14, der den Wicklungsabschnitt 12 im Zuge eines Fügeprozesses aufnimmt und im Anschluss an einen Verformungsprozess unverlierbar kontaktiert.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 1: Stator
- 2: Statorgrundkörper
- 3: Statorwicklung
- 4: Zylinderachse
- 5: Statorzahn
- 6: Spule
- 7: Stirnseite
- 8: Schlitz/Nut
- 9: Wicklungsabschnitt
- 10: Statorkappe
- 10a: Kappenabschnitt
- 10b: Kragen-/Randabschnitt
- 11: Durchbruch/Öffnung
- 12: Wicklungsabschnitt/Spulenende
- 13: Aufnahmekontur
- 14: Kontakthaken
- 14a: verformbarer Hakenschenkel/Freischenkel
- 14b: festgelegter Hakenschenkel
- 14c: Verbindungsschenkel
- 15: Kontaktanschlusses
- 16: Axiallasche
- 16a: Axialsteg
- 16b: Axialsteg
- 17: Schlitz/Nut
- 18: U-Schenkel
- 19: U-Schenk
- 20: Verbindungsschenkel
- 21: Hakenbereich/Schenkelabschnitt
- 22: Aufnahme-/Einlaufbereich
- 23: Übergangsbereich/Engstelle
- 24: Schenkelabschnitt
- 25: Klemm-/Kontaktbereich
- 26: Richtungspfeil
- 27: Schweißzange

- A: Axialrichtung
- R: Radialrichtung
- U: Umfangsrichtung

- a,b: Abstand/lichte Weite
- c: lichte Weite
- α,β: Winkel

## Patentansprüche

1. Stator (1) eines Elektromotors, aufweisend
- einen hohlzylindrischen Statorgrundkörper (2) mit einer Anzahl von bezogen auf die Zylinderachse (4) radial orientierten Statorzähnen (5), welche Spulen (6) einer mehrphasigen Spulenwicklung (3) tragen,
- eine stirnseitig am Statorgrundkörper (2) angeordnete, insbesondere kreisringförmige, Statorkappe (10) mit mindestens einer Aufnahmekontur (13), in welche mindestens ein Wicklungsabschnitt (12) der Statorwicklung (3) eingelegt ist, und
- mindestens einen Kontaktanschluss (15) mit einem verformbaren Kontakthaken (14), der den mindestens einen Wicklungsabschnitt (12) im Zuge eines Fügeprozesses aufnimmt und im Anschluss an einen Verformungsprozess unverlierbar kontaktiert.

2. Stator (1) nach Anspruch 1,
**dadurch gekennzeichnet,**
**dass** die Aufnahmekontur (13) von einer Anzahl an, vorzugsweise axial zugänglichen, Aufnahmerillen gebildet ist, in welche der mindestens eine Wicklungsabschnitt (12) der Statorwicklung (3) eingelegt ist.

3. Stator (1) nach einem der Ansprüche 1 bis 2,
**dadurch gekennzeichnet,**
**dass** die Aufnahmekontur (13) in einer Anzahl von zueinander beabstandeten Axiallaschen (16) gebildet ist.

4. Stator (1) nach Anspruch 3,
**dadurch gekennzeichnet,**
**dass** die Axiallaschen (16) an die Statorkappe (10) angeformt sind und freiendseitig zueinander beabstandete Axialstege (16a, 16b) unter Ausbildung der, insbesondere rillen-, schlitz- oder nutartigen, Aufnahmekontur (13) aufweist.

5. Stator (1) nach Anspruch 3 oder 4,
**dadurch gekennzeichnet,**
**dass** der Kontakthaken (14) des Kontaktanschlusses (15) im Zuge des Fügeprozesses in Axialrichtung (A) zwischen die Axiallaschen (16) greift und dabei den oder jeden in der Aufnahmekontur (13) einliegenden Wicklungsabschnitt (12) der Statorwicklung (3) aufnimmt.

6. Stator (1) nach einem der Ansprüche 1 bis 5,
**dadurch gekennzeichnet,**
**dass** der Kontaktanschluss (14) ein U-förmiges Stanz-Biegeteil ist, dessen einer U-Schenkel (18) unter Bildung des Kontakthakens (14), insbesondere L-förmig, gebogen ist.

7. Stator (1) nach einem der Ansprüche 1 bis 6,
**dadurch gekennzeichnet,**
**dass** der Kontakthaken (14) des Kontaktanschlusses (15) zwischen zwei Hakenschenkeln (14a, 14b) einen, vorzugsweise ösenartigen oder konischen, Kontakt- und/oder Klemmbereich (25) für den oder jeden Wicklungsabschnitt (12) der Statorwicklung (3) aufweist.

8. Stator (1) nach einem der Ansprüche 1 bis 7,
**dadurch gekennzeichnet,**
**dass** der Kontakthaken (14) des Kontaktanschlusses (15) einen spitzwinkligen Aufnahme- oder Eintrittsbereich (22) aufweist, wobei der Winkel (α) insbesondere (35 ± 15) °, vorzugsweise zwischen 20° und 45°, beträgt.

9. Stator (1) nach einem der Ansprüche 1 bis 8,
**dadurch gekennzeichnet,**
**dass** die Statorkappe (10) einen, vorzugsweise kreisringförmigen, Kappenabschnitt (10a) und einen randseitigen Kragenabschnitt (10b) sowie eine Anzahl an Durchbrüchen (11) für den jeweiligen Wicklungsabschnitt (12) der Statorwicklung (3) aufweist, wobei die Aufnahmekontur (13) oder die jeweilige Axiallasche (16) an die Statorkappe (10), vorzugsweise an den Kappenabschnitt (10a), angeformt ist.

10. Elektromotor mit einem Stator (1) nach einem der Ansprüche 1 bis 9.
